# EUROPEAN PATENT SPECIFICATION

(11) **EP 4 109 420 B1**
(45) Date of publication and mention of the grant of the patent: **01.10.2025**
(21) Application number: 21290041.9
(22) Date of filing: 25.06.2021
(51) Int. Cl.: G07C 9/20, G07B 11/00, G03H 1/22, G06K 7/10

(54) **HOLOGRAPHIC BARCODE TARGET GENERATOR**
HOLOGRAPHISCHER BARCODE-ZIELGENERATOR
GÉNÉRATEUR DE CODES À BARRES HOLOGRAPHIQUES CIBLE

(43) Date of publication of application: 28.12.2022
(73) Proprietor: Conduent Business Services, LLC, Dallas, TX 75204 (US)
(72) Inventor: Ringeisen, Sebastien, 07440 Champis (FR)
(74) Representative: Michalski Hüttermann & Partner Patentanwälte mbB

(56) References cited:
- JP-A- H0 612 509
- JP-A- H04 330 583
- JP-A- H05 166 022

## Description

### TECHNICAL BACKGROUND

The present disclosure generally describes authentication systems and methods, and in particular aspects describes systems and methods incorporating a holographic barcode target generator.

Authentication systems are used to verify information and authenticate identity in a variety of settings. For example, an article may be imprinted with an authentication code *(e.g.,* a barcode or other identifying insignia) and an authentication system may image, scan, or otherwise read the authentication code in order to perform various determinations and operations. Imaging, scanning, or other reading may be effected through the use of an imaging device configured to capture an image of the authentication code. In settings where the imaging device is substantially immobile, it may be aimed at a particular image capture location. Thus, to perform authentication, the authentication code may be placed at the target location in order to be properly read.

Non-limiting examples of settings in which the imaging device, and thus the authentication system, are substantially fixed include: ticketing kiosks, admission gates *(e.g.,* for public transit systems or restricted-access areas), post offices, package routing systems, and the like. For such applications, the article bearing the authentication code may be a transit ticket or pass, an event ticket, a letter or package, and the like.

The authentication code may be a computer-readable insignia which encodes information such that it is readable to the authentication system. For example, the authentication code may be a two-dimensional (2D) barcode with a pattern of multiple colors (e.g., black and white). When scanned by an appropriate imaging device *(e.g.,* a barcode reader), the authentication code provides credentials or other information to the authentication system. Where the credentials or other information meet certain criteria (*e.g*., indicating that the bearer of the article is permitted to access a location or event, authentication system may grant such access.

In certain settings, the authentication system may be subject to extremely large amounts of use. For example, certain transit stations are used by millions of passengers in a single day. Even where such stations have many authentication systems *(i.e.,* many gates), an individual authentication system may be used by tens or hundreds of thousands of passengers. Moreover, such use is typically not constant throughout the day, and is instead higher during rush hour periods.

JP H05 166022 A discloses that a bar code 6 attached on a passenger ticket is read by a bar code reader contained in an automatic ticket examining machine. Thus, the information on the ticket can be reed with no contact and therefore a commutation ticket can be examined together with the ticket holder. As a result, the ticket examining operations can be smoothly carried out. So, the same effect is obtained for the general passenger tickets and the coupon tickets. Then the automatic ticket examination efficiency is improved. Furthermore, the code is transformed into a hologram so that the forgery of the commutation tickets, etc., can be prevented.

JP H04 330583 A discloses that a semiconductor laser is used as a laser beam source. When a laser beam L is emitted advancing the aperture part of a plane mirror, the laser beam L is divided into the two parts. In other words, a laser beam part L1 passing the aperture part of the plane mirror is introduced into the light beam deflecting optical system of a bar code reader after being changed to a convergence laser beam via a convex lens, and after that, it is emitted and deflected from a bar code reading window as the laser beam for bar code information reading. Meanwhile, a laser beam part L2 reflected on the reflecting plane of the plane mirror is reflected and deflected advancing a transmission type hologram, and as a result, a target image can be formed at the upper side of the bar code reading window as a hologramic image.

JP H06 12509 A discloses that a light beam emitted from the beam scanner of the optical reading system built in an enclosure is projected from a prescribed reading window, an object existent in a space above the reading window is irradiated with the light beam, and the feature of the object is read by detecting light reflected from the object. Concerning such an optical reader, a hologram is installed outside the enclosure, so as to display a guide display image showing at least either the optimum reading height or the optimum reading direction in the space in front of the reading window by irradiating the object with referent light from a light source for reproducing.

### OVERVIEW

Various aspects of the present disclosure provide for authentication systems and methods which provide a holographic target in free space.

According to the invention, there is provided a ticket validation system according to claim 1.

There is also provided an authentication code reading method according to claim 13.

### BRIEF DESCRIPTION OF THE DRAWINGS

These and other aspects of the present disclosure are exemplified by the following Detailed Description, which may be read in view of the associated drawings, in which:
FIG. 1 illustrates an authentication system according to a comparative example;
FIG. 2 illustrates an exemplary authentication system according to various aspects of the present disclosure;
FIG. 3 illustrates an exemplary access system according to various aspects of the present disclosure;
FIG. 4 illustrates an exemplary controller according to various aspects of the present disclosure; and
FIGS. 5 and 6 illustrates exemplary methods according to various aspects of the present disclosure.

### DETAILED DESCRIPTION

The present disclosure provides for authentication systems, devices, and methods which may be used in a large variety of settings. While the following detailed description is presented primarily in the context of a 2D barcode scanner in transit settings, this presentation is merely done for ease of explanation and the present disclosure is not limited to only such settings. For example, practical implementations of the present disclosure include shipping logistics, in which a package may be imprinted with an authentication pattern indicating an origin, a destination, and/or a shipping method for the package; event management, in which an admission ticket may bear an authentication pattern indicating that the ticket is genuine and/or that the ticket bearer is the person who purchased the ticket; location security, in which an identification badge may bear an authentication pattern indicating that the badge holder has sufficient authorization and/or clearance to enter a restricted area; and so on.

As used herein, an "authentication pattern" may be any machine-readable insignia which encodes authentication information. Exemplary authentication patterns include 2D barcodes, including but not limited to QR codes, Aztec codes, Data Matrix codes, MaxiCodes, PDF417 codes, and the like.

As noted above, in certain transit settings an authentication system may be subject to extremely large amounts of use. In such settings, it is important that the authentication system be easy to use even by inexperienced users, that the authentication system have a form factor conducive to quick passage, that the authentication system protect the user's personal information during use, and so on. However, comparative examples of authentication systems are deficient with regard to these factors.

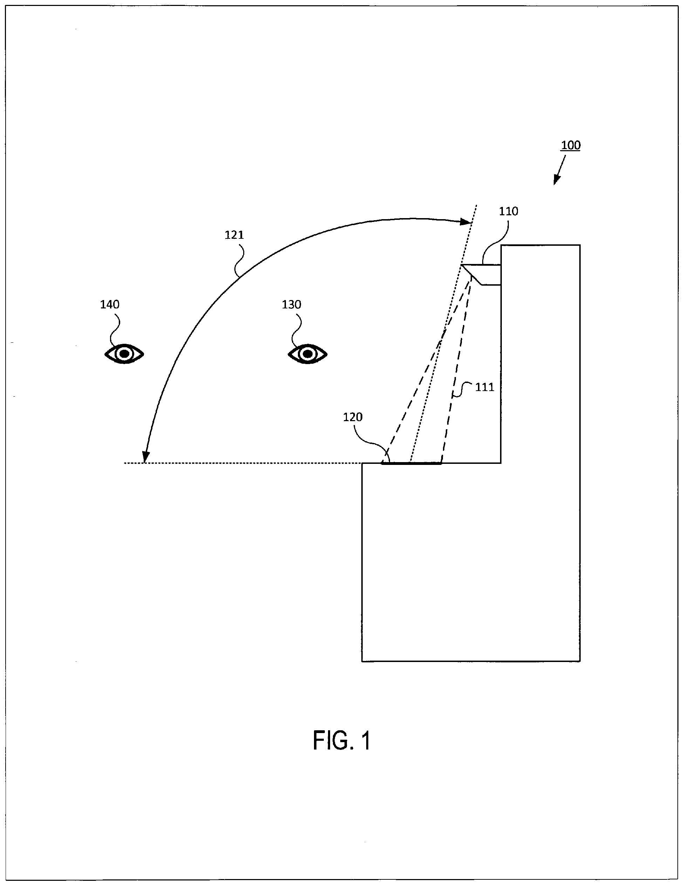

FIG. 1 illustrates one example of a comparative authentication system 100. The comparative system 100 includes a scanner 110 with a scanning field-of-view (FOV) 111 encompassing a physical target 120 at a particular distance from the scanner 110. In the comparative system 100, the target 120 is physically located on a housing on which the scanner 110 is located *(e.g.,* on an admission gate). In use, a user 130 places an article bearing an authentication code in the vicinity of the target 120 and the scanner 110 images the authentication code.

However, because the target 120 is a physical target, the housing necessarily occupies a great deal of space. As illustrated in FIG. 1, the target 120 is located on a portion of the housing which projects toward the user 130. This increased physical footprint may obstruct foot traffic and thus decrease the average speed at which the user 130 is able to be authenticated. Moreover, the increased physical footprint may obstruct the user 130 from placing the authentication pattern near the target 120. If the authentication pattern is on the top of a tall article *(e.g.,* a box), it may not be possible for the user 130 to place the authentication pattern near the target 120. Moreover, where the target 120 is printed, affixed, or otherwise located on the housing, it may be visible from a large viewing FOV 121 which may include an unauthorized user 140. Depending on the form factor of the comparative system 100, the viewing FOV 121 may subtend a solid angle as large as 2π steradians (sr).

These and other shortcomings of the comparative system 100 may reduce the overall security provided by the comparative system 100, may reduce the throughput of the comparative system 100, may make the comparative system 100 difficult to use, may limit the situations where the comparative system 100 may be feasibly located, may result in poor ergonomics for a user of the comparative system 100, and so on.

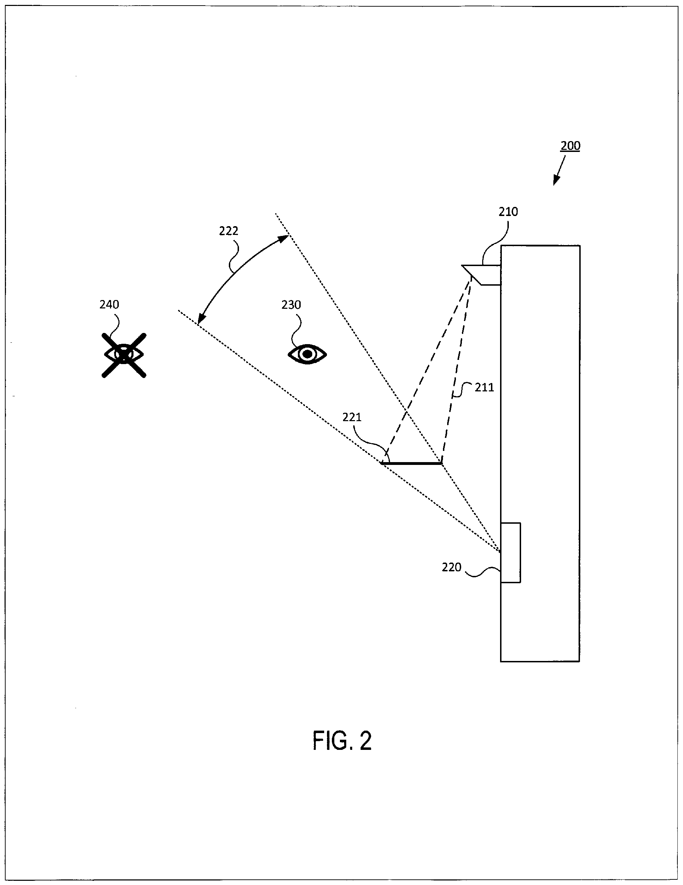

FIG. 2 illustrates an exemplary authentication system 200 (also referred to as a "verification device") in accordance with the present invention, which overcomes one or more of the shortcomings of the comparative system. As shown in FIG. 2, the authentication system 200 includes a scanner 210 *(e.g.,* a 2D barcode scanner) with a scanning FOV 211 encompassing a particular region of free space. Rather than utilizing a physical target, the authentication system 200 utilizes a hologram generator 220 to present a holographic target 221 which, when viewed by the user 230, appears at the region of free space where it may be read by the scanner 210. Because the target 221 is a holographic target generated by the hologram generator 220, it may only be visible from a predetermined viewing FOV 222. As such, the target 221 may be visible to the user 230 *(e.g.,* a person in an appropriate position to use the authentication system 200) while remaining substantially invisible to an unauthorized user 240 positioned outside of the viewing FOV 222.

In particular implementations, the viewing FOV 222 may subtend a solid angle of π/8 steradians (sr) or greater and 3π/2 sr or less. For example, the viewing FOV 222 may be between π/8 sr and 3π/2 sr, between π/8 sr and π sr, between π/8 sr and π/2 sr, between π/8 sr and π/4 sr, between π/4 sr and 3π/2 sr, between π/4 sr and π sr, between π/4 sr and π/2 sr, between π/2 sr and 3π/2 sr, between π/2 sr and π sr, and/or between π sr and 3π/2 sr. By reducing the viewing FOV 222 relative to the comparative system 100, the system 200 may provide enhanced security and/or privacy. In some practical implementations, the target 221 may be visible or partially-visible from some points of view lying outside of the viewing FOV 222 (e.g., from positions corresponding to certain higher diffractive orders); however, for purposes of the present disclosure it is sufficient if the viewing FOV 222 is the primary area from which the target 221 may be seen, even if there are a small amount of other perspectives from which the target 221 may be seen.

The scanner 210 may be or include an image sensor and/or associated image processing circuitry. The image sensor may be a solid-state imaging device, such as a charge-coupled device (CCD) or a complementary metal-oxide-semiconductor (CMOS) device. The image processing circuitry may include driving circuitry, timing circuitry, analog-to-digital converters (ADCs), digital-to-analog converters (DACs), sample-and-hold (S/H) circuits, memory, buffers, interfaces, and the like.

The hologram generator 220 may be configured to generate a static image as the target 221. Thus, the hologram generator 220 may be or include a flat holographic plate imprinted or provided with a pattern that, to the user 230, will appear as the target 221. The hologram generator 220 may also be configured to generate a dynamic image *(e.g.,* a moving image, a static image with a changing color, and so on) as the target 221. Thus, the hologram generator 220 may additionally or alternatively be or include an electronic screen that may form and/or change the appearance of a pattern that, to the user 230, will appear as the target 221. The target 221 may comprise simple shapes or figures that may be understood by the user 230 regardless of his or her native language, etc. For example, the target 221 may be or include a bullseye pattern, an X, an image of a sample authentication pattern, a square (or other polygon) approximating the size and shape of the authentication pattern, an icon, an arrow, and so on.

In one particular example, the hologram generator 220 is a static hologram generator including one or more parallel flat, substantially-transparent plates which effectively form a negative refractive index lens. An image may be projected onto or viewed through the plates, and thereby appear to the viewer as floating in free space. In this example, the hologram generator 220 may generate the target 221 with a viewing FOV 222 of approximately 2π/3 radians (rad) in the lateral and vertical directions, corresponding to a solid angle of approximately 1.1π sr.

In order to generate the target 221 at an appropriate location in free space, the hologram generator 220 may include various optical elements, including but not limited to light sources (e.g., lasers, light-emitting-diodes (LEDs), cold-cathode fluorescent lamps (CCFLs), discharge lamps, and so on), polarizers, lenses, lens arrays, prisms, beam splitters, collimators, filters, mirrors, waveguides, liquid crystal (LC) panels, parallax barriers, spatial light modulators (SLMs) (e.g., amplitude-based SLMs, phase-only SLMs, and so on), and the like. The hologram generator 220 may additionally include various electronic elements (e.g., where the target 221 is a dynamic image), including but not limited to transistors, drivers, capacitors, supercapacitors, electrodes, microprocessors, integrated circuits (ICs), and the like.

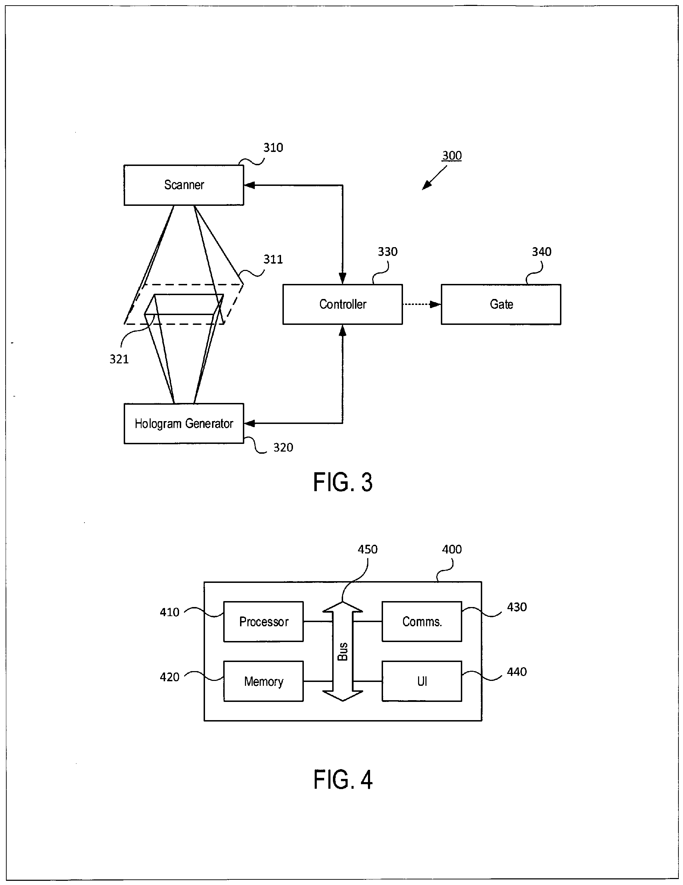

Authentication systems and devices in accordance with the present disclosure may be implemented as part of an access system, such as a ticket validation system. FIG. 3 illustrates an exemplary access system 300 in accordance with various aspects of the present disclosure. The access system 300 includes a scanner 310, which may be the same as or similar to the scanner 210 illustrated in FIG. 2; a hologram generator 320, which may be the same as or similar to the hologram generator 320 illustrated in FIG. 3; a controller 330 operatively connected to the scanner 310 and (in some implementations) the hologram generator 320; and a gate 340. The scanner 310 is configured with a scanning FOV 311 encompassing a particular region of free space. The hologram generator 320 is configured to present a holographic target 321 which, when viewed by a user, appears at the region of free space where it may be read by the scanner 310.

The controller 330 may be or include circuits and other elements to provide control of the system 300, including one or more microprocessors as will be described in more detail below. The controller 330 may be operable to send control signals to the scanner 310, for example to instruct or otherwise cause the scanner 310 to capture an image within its scanning FOV 311. The controller 330 may also be operable to receive signals from the scanner 310, for example to receive image data or other output. In implementations where, for example, the hologram generator 320 includes electronic components (e.g., to generate a dynamic image), the controller 330 may be operable to send and/or receive signals to/from the hologram generator 320. The controller 330 may be configured to selectively send a control signal to the gate 340, thereby to cause the gate to open or close.

In an exemplary usage, the hologram generator 320 is configured to project the target 321 onto free space in a predetermined target area within the scanning FOV 311 of the scanner 310, and the scanner 310 is configured to capture an image of an authentication pattern (e.g., a 2D barcode) within the predetermined target area. The scanner 310 may then output image *(e.g.,* in the form of image data) to the controller 330, which may be configured to process the image and determine whether the authentication pattern meets a predetermined criterion. The predetermined criterion may be whether the authentication pattern indicates a user is authorized to enter a particular area, whether the authentication pattern indicates a user's ticket is genuine and/or unused, whether the authentication pattern indicates a user's ticket is unexpired, whether the authentication pattern indicates a user's transit pass has sufficient funds to pay a transit fare, and combinations thereof.

To facilitate the determination, the controller 330 may be configured to generate an authentication information (*e.g*., identity information, payment information, date information, etc.) from the image and/or to compare the authentication information with a reference information. If the controller 330 determines that the authentication information agrees with the reference information (or otherwise meets the predetermined criterion), the controller 330 may then be configured to generate the control signal causing the gate 340 to open. The system 300 may include additional components to provide different operational modes. For example, the system 300 may include a proximity sensor configured to monitor the area of free space where the target 321 is to be displayed (or another predetermined area) and, responsive to detecting a presence in the area, generating a presence detection signal. In such implementations, the hologram generator 320 may be configured to receive the presence detection signal and begin generating the target 321 only when a user is present.

The gate 340 may be any device capable of selectively permitting and denying passage. For example, the gate 340 may include physical barrier such as a door, a bar, a turnstile, and so on; an actuator such as a motor, a rotor, a deadbolt, and so on; and mechanisms to selectively open and close the physical barrier using the actuator. In some implementations, the gate 340 may include a sensor *(e.g.,* an infrared beam) to determine when the user has passed therethrough, and may automatically close the physical barrier thereafter.

An exemplary controller 400, which may be the same as or similar to the controller 330, is illustrated in FIG. 4. As illustrated, the controller 400 includes a processor 410, a memory 420, communication circuitry 430, and a user interface (UI) 440, each of which communicate with one another via a bus 450. The processor 410 may be or include one or more microprocessors and/or one or more cores. In one implementation, the processor 410 is a central processing unit (CPU) of the controller 400.

The memory 420 may be any computer-readable storage medium *(e.g.,* a non-transitory computer-readable medium), including but not limited to a hard disk, a Universal Serial Bus (USB) drive, a removable optical medium *(e.g.,* a digital versatile disc (DVD), a compact disc (CD), etc.), a removable magnetic medium *(e.g.,* a disk, a storage tape, etc.), and the like, and combinations thereof. The memory 420 may include non-volatile memory, such as flash memory, read-only memory (ROM), erasable programmable read-only memory (EPROM), electrically erasable programmable read-only memory (EEPROM), a solid-state device (SSD), and the like; and/or volatile memory, such as random access memory (RAM), dynamic RAM (DRAM), double data rate synchronous DRAM (DDRAM), static RAM (SRAM), and the like. The memory 420 may store instructions that, when executed by the processor 410, cause the processor 410 to perform various operations, including those disclosed herein. When implemented in an access system such as the access system 300, the memory 420 may be configured to store reference information for determining whether an authentication pattern meets a predetermined criterion.

The communication circuitry 430 may include circuitry and interface components to provide communication with devices external to or separate from the controller 400. The communication circuitry 430 may be or include wired communication circuitry *(e.g.,* for communication via electrical signals on a wire, optical signals on a fiber, and so on) or wireless communication circuitry *(e.g.,* for communication via electromagnetic signals in free space, optical signals in free space, and so on). The communication circuitry 430 may be configured to communicate using one or more communication protocols, such as Ethernet, Wi-Fi, Li-Fi, Bluetooth, ZigBee, WiMAX, Universal Mobile Telecommunications System (UMTS or 3G), Long Term Evolution (LTE or 4G), New Radio (NR or 5G), and so on. When implemented in an access system such as the access system 300, the communication 430 may be configured to receive, from an external source such as a remote device, reference information for determining whether an authentication pattern meets a predetermined criterion.

The UI 440 may include circuitry and interface components to provide interaction with a user. For example, the UI 440 may include visual output devices such as a display *(e.g.,* a liquid crystal display (LCD), and organic light-emitting display (OLED), a thin-film transistor (TFT) display, etc.), a light source *(e.g.,* an indicator light-emitting diode (LED), etc.), and the like; audio output devices such as a speaker; and haptic feedback devices such as a rumble pack. The UI 440 may additionally or alternatively include visual input devices such as a camera *(e.g.,* a visible-light sensor, a proximity sensor, etc.); audio input devices such as a microphone; and physical input devices such as a button *(e.g.,* a physical button, a soft button, etc.), a touchscreen, and the like. When implemented in an access system such as the access system 300, the UI 440 may be configured to provide feedback to the user indicative of the determination as to whether the authentication pattern meets the predetermined criterion. Such feedback may be visual *(e.g.,* changing a light to green or red, displaying a check mark or an X, etc.), auditory *(e.g.,* playing a chime or a buzz, etc.), tactile *(e.g.,* providing a brief or long vibration), and combinations thereof.

In some implementations, the authentication systems as described above may be provided as a unitary device including the scanner and hologram generator, as well as any other associated components or electronics. In other implementations, the authentication systems may be provided as a retrofit kit so as to modify an existing system *(e.g.,* an existing access system). Such kits may include only some components of the system; for example, when the existing system includes a scanner, then the kit may include only a hologram generator and/or controller.

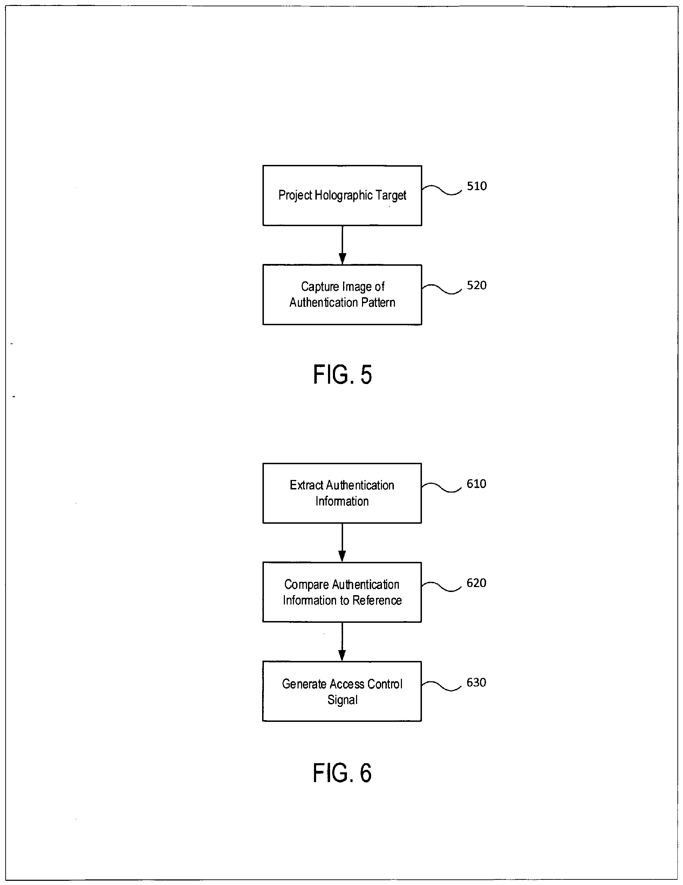

Authentication systems and devices *(e.g.,* the system 200 and/or the system 300) may be configured to perform an authentication code reading method. Exemplary methods are illustrated in FIGS. 5 and 6. While the following description is presented using an example in which the operations are performed by or under the control of the controller *(e.g.,* the controller 330 and/or the controller 400), in practical implementations the operations may be performed by other elements and may be performed in a distributed manner. For example, some of the following operations may be performed by circuit components of the scanner *(e.g.,* the scanner 210 and/or the scanner 310), by circuit components of the hologram generator *(e.g.,* the hologram generator 220 and/or the hologram generator 320), by other processing nodes, or by combinations thereof.

The authentication code reading method illustrated in FIG. 5 includes an operation 510 of projecting a holographic target onto free space in a predetermined target area and an operation 520 of capturing an image of an authentication pattern in the target area. In one example of operation 510, the controller may transmit a control signal to the hologram generator causing the hologram generator to generate and/or modify the holographic target. In another example of operation 510 *(e.g.,* where the hologram generator is a flat holographic plate configured to generate a static image as the holographic target), the holographic target may be continuously projected without the need for any control signal. In one example of operation 520, the controller may transmit a control signal to the scanner causing the scanner to capture an image.

The authentication code reading method of FIG. 5 may be extended by including the operations of FIG. 6. FIG. 6 illustrates an operation 610 of extracting or otherwise generating an authentication information from the image, an operation 620 of comparing the authentication information to a reference information, and an operation of generating an access control signal based on the comparing. The operations of FIG. 6 may be performed in the controller, and may be based on image data received from the scanner.

Depending on the results of operation 620, the access control signal of operation 630 may be configured to appropriately control a gate. For example, in a case where operation 620 results in a determination that the authentication information meets a predetermined criterion represented by the reference information, the access control signal may be configured to cause a gate *(e.g.,* the gate 340) to open. On the other hand, in a case where operation 620 results in a determination that the authentication information does not meet the predetermined criterion represented by the reference information, the access control signal may be configured to cause the gate to close (if open) or to remain closed and/or locked (if closed). The access control signal may additionally or alternatively be configured to provide a feedback to a user based on the results of operation 620. For example, in the case where operation 620 results in a determination that the authentication information meets the predetermined criterion represented by the reference information, the access control signal may be configured to cause the system to flash a green LED, display a check mark, play a chime, provide a particular vibration, and so on, thereby to indicate that the authentication pattern has been verified. Moreover, in a case where operation 620 results in the determination that the authentication information does not meet the predetermined criterion represented by the reference information, the access control signal may be configured to cause the system to flash a red LED, display an X, play a buzz, provide another vibration, and so on, thereby to indicate that the authentication pattern has not been verified.

In implementations where the system includes a proximity sensor, certain operations of FIGS. 5 and 6 may be triggered by the proximity sensor. In one example, the system may be configured to monitor a space in front of the gate to determine whether a user has entered the space and then perform operation 510. Additionally or alternatively, the system may be configured to monitor the target area to determine that an authentication pattern has entered the target area and, after a predetermined time *(e.g.,* 0.5 s, 1 s, etc.) has elapsed thereafter, perform the operation of 520 and/or the operations of FIG. 6.

The exemplary systems and methods described herein may be performed under the control of a processing system executing computer-readable codes embodied on a computer-readable recording medium or communication signals transmitted through a transitory medium. The computer-readable recording medium may be any data storage device that can store data readable by a processing system, and may include both volatile and nonvolatile media, removable and non-removable media, and media readable by a database, a computer, and various other network devices.

Examples of the computer-readable recording medium include, but are not limited to, read-only memory (ROM), random-access memory (RAM), erasable electrically programmable ROM (EEPROM), flash memory or other memory technology, holographic media or other optical disc storage, magnetic storage including magnetic tape and magnetic disk, and solid state storage devices. The computer-readable recording medium may also be distributed over network-coupled computer systems so that the computer-readable code is stored and executed in a distributed fashion. The communication signals transmitted through a transitory medium may include, for example, modulated signals transmitted through wired or wireless transmission paths.

The above description and associated figures teach the best mode of the invention, and are intended to be illustrative and not restrictive. Many embodiments and applications other than the examples provided would be apparent to those skilled in the art upon reading the above description. The scope should be determined, not with reference to the above description, but instead with reference to the appended claims, along with the full scope of equivalents to which such claims are entitled. It is anticipated and intended that future developments will occur in the technologies discussed herein, and that the disclosed systems and methods will be incorporated into future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary is made herein. In particular, the use of the singular articles such as "a," "the," "said," etc. should be read to recite one or more of the indicated elements unless a claim recites an explicit limitation to the contrary.

The Abstract is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

## Claims

1. A ticket validation system, comprising:
a scanner (210, 310) configured to capture an image of an authentication pattern in a predetermined target area;
a hologram generator (220, 320) configured to project a holographic target (221, 321) onto free space in the target area; and
a controller (330, 400), wherein
the system comprises a proximity sensor configured to generate a presence detection signal;
and wherein the controller (330, 400) is configured to:
process the image and output a determination of whether the authentication pattern meets a predetermined criterion;
wherein the hologram generator is configured to receive the presence detection signal, and to begin projecting the holographic target when the presence detection signal indicates that a user (230) is present in a predetermined location.

2. The system according to claim 1, wherein the hologram generator (221, 321) is disposed such that the holographic target is visible from within a predetermined field of view (222), and is not visible from outside of the predetermined field of view.

3. The system according to claim 2, wherein the predetermined field of view subtends a solid angle of between π/128 and π/4 steradians.

4. The system according to claim 1, wherein the authentication pattern is a two-dimensional barcode.

5. The system according to claim 1, wherein the holographic target is a static image.

6. The system according to claim 1, wherein the holographic target is a dynamic image.

7. The system according to claim 1, wherein the controller (330, 400) is configured to:
generate an authentication information from the image;
compare the authentication information with a reference information, the reference information corresponding to the predetermined criterion; and
in a case where the authentication information agrees with the reference information, generate a control signal configured to cause a gate (340) to open.

8. The system according to claim 7, further comprising a memory (420) configured to store the reference information.

9. The system according to claim 7, further comprising communication circuitry (430) configured to receive the reference information from a remote device.

10. The system according to claim 1, further comprising a user interface (440).

11. The system according to claim 10, wherein the user interface (440) includes a display device configured to display a visual representation of the determination.

12. The system according to claim 10, wherein the user interface (440) includes an audio transducer configured to provide an auditory representation of the determination.

13. An authentication code reading method using the system of claim 1, comprising:
projecting a holographic target onto free space in a predetermined target area; and capturing an image of an authentication pattern in the target area.

14. The method according to claim 13, further comprising:
extracting an authentication information from the authentication pattern;
comparing the authentication information to a reference information; and
generating an access control signal based on the comparing.

15. The method according to claim 14, further comprising:
in a case where the access control signal indicates an access grant, causing a gate to open.

16. The method according to claim 14, wherein the authentication pattern is a two-dimensional barcode.

17. The method according to claim 13, wherein the holographic target is configured to be visible from within a predetermined field of view, and not visible from outside of the predetermined field of view.

## Patentansprüche

1. Ein Ticket-Validierungssystem, umfassend:
- einen Scanner (210, 310), der dazu eingerichtet ist, ein Bild eines Authentifizierungsmusters in einem vorgegebenen Zielbereich zu erfassen;
- einen Hologrammgenerator (220, 320), der dazu eingerichtet ist, ein holografisches Ziel (221, 321) in den freien Raum des Zielbereichs zu projizieren; und
- eine Steuereinheit (330, 400),
wobei das System einen Näherungssensor umfasst, der dazu eingerichtet ist, ein Anwesenheitssignal zu erzeugen;
und wobei die Steuereinheit (330, 400) dazu eingerichtet ist:
- das Bild zu verarbeiten und eine Bestimmung auszugeben, ob das Authentifizierungsmuster ein vorgegebenes Kriterium erfüllt;
wobei der Hologrammgenerator dazu eingerichtet ist, das Anwesenheitssignal zu empfangen und mit der Projektion des holografischen Ziels zu beginnen, wenn das Anwesenheitssignal anzeigt, dass sich ein Benutzer (230) an einem vorgegebenen Ort befindet.

2. Das System nach Anspruch 1, wobei der Hologrammgenerator (221, 321) so angeordnet ist, dass das holografische Ziel innerhalb eines vorgegebenen Sichtfeldes (222) sichtbar ist und außerhalb des vorgegebenen Sichtfeldes nicht sichtbar ist.

3. Das System nach Anspruch 2, wobei das vorgegebene Sichtfeld einen Raumwinkel zwischen π/128 und π/4 Steradiant einnimmt.

4. Das System nach Anspruch 1, wobei das Authentifizierungsmuster ein zweidimensionaler Barcode ist.

5. Das System nach Anspruch 1, wobei das holografische Ziel ein statisches Bild ist.

6. Das System nach Anspruch 1, wobei das holografische Ziel ein dynamisches Bild ist.

7. Das System nach Anspruch 1, wobei die Steuereinheit (330, 400) dazu eingerichtet ist:
- Authentifizierungsinformationen aus dem Bild zu erzeugen;
- die Authentifizierungsinformationen mit einer Referenzinformation zu vergleichen, wobei die Referenzinformation dem vorgegebenen Kriterium entspricht; und
- in einem Fall, in dem die Authentifizierungsinformationen mit der Referenzinformation übereinstimmen, ein Steuersignal zu erzeugen, das dazu eingerichtet ist, ein Gate (340) zu öffnen.

8. Das System nach Anspruch 7, ferner umfassend einen Speicher (420), der dazu eingerichtet ist, die Referenzinformation zu speichern.

9. Das System nach Anspruch 7, ferner umfassend eine Kommunikationsschaltung (430), die dazu eingerichtet ist, die Referenzinformation von einem entfernten Gerät zu empfangen.

10. Das System nach Anspruch 1, ferner umfassend eine Benutzerschnittstelle (440).

11. Das System nach Anspruch 10, wobei die Benutzerschnittstelle (440) ein Anzeigegerät umfasst, das dazu eingerichtet ist, eine visuelle Darstellung der Bestimmung anzuzeigen.

12. Das System nach Anspruch 10, wobei die Benutzerschnittstelle (440) einen Audiowandler umfasst, der dazu eingerichtet ist, eine akustische Darstellung der Bestimmung bereitzustellen.

13. Ein Verfahren zum Lesen eines Authentifizierungscodes unter Verwendung des Systems nach Anspruch 1, umfassend:
- das Projizieren eines holografischen Ziels in den freien Raum in einem vorgegebenen Zielbereich; und
- das Erfassen eines Bildes eines Authentifizierungsmusters in dem Zielbereich.

14. Das Verfahren nach Anspruch 13, ferner umfassend:
- das Extrahieren von Authentifizierungsinformationen aus dem Authentifizierungsmuster;
- das Vergleichen der Authentifizierungsinformationen mit einer Referenzinformation; und
- das Erzeugen eines Zugangssignals basierend auf dem Vergleich.

15. Das Verfahren nach Anspruch 14, ferner umfassend: - im Fall, dass das Zugangssignal eine Zugangsgewährung anzeigt, das Öffnen eines Gates zu veranlassen.

16. Das Verfahren nach Anspruch 14, wobei das Authentifizierungsmuster ein zweidimensionaler Barcode ist.

17. Das Verfahren nach Anspruch 13, wobei das holografische Ziel so eingerichtet ist, dass es innerhalb eines vorgegebenen Sichtfeldes sichtbar und außerhalb des vorgegebenen Sichtfeldes nicht sichtbar ist.

## Revendications

1. Un système de validation de billets, comprenant :
- un scanner (210, 310) configuré pour capturer une image d'un motif d'authentification dans une zone cible prédéterminée ;
- un générateur d'hologrammes (220, 320) configuré pour projeter une cible holographique (221, 321) dans l'espace libre de la zone cible ; et
- un contrôleur (330, 400), dans lequel
le système comprenant un capteur de proximité configuré pour générer un signal de détection de présence;
et dans lequel le contrôleur (330, 400) étant configuré pour :
- traiter l'image et fournir une détermination quant à savoir si le motif d'authentification satisfait un critère prédéterminé ;
le générateur d'hologrammes étant configuré pour recevoir le signal de détection de présence et commencer à projeter la cible holographique lorsque le signal de présence indique qu'un utilisateur (230) est présent à un emplacement prédéterminé.

2. Le système selon la revendication 1, dans lequel le générateur d'hologrammes (221, 321) est disposé de telle sorte que la cible holographique est visible à l'intérieur d'un champ de vision prédéterminé (222) et n'est pas visible à l'extérieur de ce champ de vision.

3. Le système selon la revendication 2, dans lequel le champ de vision prédéterminé sous-tend un angle solide compris entre π/128 et π/4 stéradians.

4. Le système selon la revendication 1, dans lequel le motif d'authentification est un code-barres bidimensionnel.

5. Le système selon la revendication 1, dans lequel la cible holographique est une image statique.

6. Le système selon la revendication 1, dans lequel la cible holographique est une image dynamique.

7. Le système selon la revendication 1, dans lequel le contrôleur (330, 400) est configuré pour :
- générer des informations d'authentification à partir de l'image ;
- comparer les informations d'authentification avec une information de référence, ladite information correspondant au critère prédéterminé ; et
- dans le cas où les informations d'authentification concordent avec l'information de référence, générer un signal de commande configuré pour provoquer l'ouverture d'un portail (340).

8. Le système selon la revendication 7, comprenant en outre une mémoire (420) configurée pour stocker l'information de référence.

9. Le système selon la revendication 7, comprenant en outre un circuit de communication (430) configuré pour recevoir l'information de référence d'un dispositif distant.

10. Le système selon la revendication 1, comprenant en outre une interface utilisateur (440).

11. Le système selon la revendication 10, dans lequel l'interface utilisateur (440) comprend un dispositif d'affichage configuré pour présenter une représentation visuelle de la détermination.

12. Le système selon la revendication 10, dans lequel l'interface utilisateur (440) comprend un transducteur audio configuré pour fournir une représentation auditive de la détermination.

13. Un procédé de lecture d'un code d'authentification à l'aide du système selon la revendication 1, comprenant :
- projeter une cible holographique dans l'espace libre d'une zone cible prédéterminée ; et
- capturer une image d'un motif d'authentification dans la zone cible.

14. Le procédé selon la revendication 13, comprenant en outre :
- extraire des informations d'authentification à partir du motif d'authentification ;
- comparer les informations d'authentification avec une information de référence ; et
- générer un signal de contrôle d'accès basé sur la comparaison.

15. Le procédé selon la revendication 14, comprenant en outre : - dans le cas où le signal de contrôle d'accès indique une autorisation d'accès, provoquer l'ouverture d'un portail.

16. Le procédé selon la revendication 14, dans lequel le motif d'authentification est un code-barres bidimensionnel.

17. Le procédé selon la revendication 13, dans lequel la cible holographique est configurée pour être visible à l'intérieur d'un champ de vision prédéterminé et non visible à l'extérieur de ce champ de vision.
